# EUROPEAN PATENT APPLICATION

(11) **EP 0 694 920 A2**
(43) Date of publication of application: **31.01.1996**
(21) Application number: 95109660.1
(22) Date of filing: 21.06.1995
(51) Int. Cl.: G11B 23/32, G11B 23/34, G11B 23/03, G11B 19/04, G11B 17/04

(54) **A cartridge for housing a disc and a disc apparatus for handling the same cartridge**

(30) Priority: 29.07.1994 JP 179248/94
(71) Applicant: KABUSHIKI KAISHA TOSHIBA, Kawasaki-shi, Kanagawa-ken 210, Tokyo (JP)
(72) Inventor: Ishii, Masaru, c/o K.K. Toshiba, Tokyo 105 (JP)
(74) Representative: Blumbach, Kramer & Partner

(57) **Abstract**

The present invention is such that with a cartridge (4) in which an optical disc is housed, various types of optical discs can be identified using identification section (10c) that indicates whether or not one side of the optical disc can be written into, identification section (10a) that indicates whether or not one side of the optical disc is for reproduction only, identification section (10b) that indicates whether or not one side or the other side of the optical disc has a reverse track spiral opposite to the forward track spiral, identifi-cation section (10d) that indicates whether or not the other side of the optical disc has the reverse track spiral, and identification section (10e) that indicates whether or not the other side of the optical disc (1a) can be written into. This makes it possible to provide a cartridge (4) with an identification section that can handle not only conventional optical disc apparatuses but also future optical disc apparatuses.

## Description

This invention relates to a cartridge for housing a disc and a disc apparatus for handling the cartridge, and more particularly to a cartridge for housing an optical disc on one side or both sides of which the information is written or from one side or both sides of which the information is reproduced, and a disc apparatus for handling the cartridge.

In recent years, optical disc apparatuses that use an optical head to record the information on an optical disc housed in a cartridge and reproduce the recorded information, have been put to practical use. For optical disc apparatuses of this type, such ones as record the data on both sides of a disc simultaneously and reproduce the recorded data from both sides of the disc, have not turned to practical use. Therefore, forward spiral tracks cannot be present on both sides of the optical disc in a mixed state, resulting in limited types of optical discs. Accordingly, fewer sensors for sensing the tracks are required. Here, the apparatus ignores the side opposite to the side of the optical disc facing the optical head.

As the near-future optical discs require an increasingly high recording capacity, however, it is necessary to increase a transfer capacity by using both sides of an optical disc as recording areas and simultaneously accessing both sides of the disc. Therefore, optical discs the direction of whose track spiral on one side differs from that of track spiral on the other side, are needed, leading to an increase in the number of types of optical discs. Thus, it is expected that the apparatus will have more sensors to sense those optical discs. Furthermore, to access both sides of the optical disc simultaneously, the apparatus must judge the state of each side of the optical disc.

These leads to demands for cartridges with identifiers able to deal with not only conventional disc apparatuses but also are also future disc apparatuses.

The object of the present invention is to provide a cartridge having an identifier able to deal with not only conventional disc apparatuses but also future disc apparatuses.

A cartridge housing a disc of the present invention has a first identifier that indicates whether or not one side of the disc can be written into, a second identifier that indicates whether or not one side of the disc is for reproduction only, a third identifier that indicates whether or not one side or the other side of the disc has a track spiral reverse to a forward direction, a fourth identifier that indicates whether or not the other side of the disc has the reverse track spiral, and a fifth identifier that indicates whether or not the other side of the disc can be written into.

A disc apparatus of the present invention houses a disc on whose spiral tracks information is recorded, receives a cartridge with an identification section that indicates whether or not the direction of spiral tracks on one side of the disc housed differs from that of spiral tracks on the other side, and records the information on the disc in the loaded cartridge and reproduces the information recorded on the disc. The disc apparatus comprises loading means for receiving the cartridge, and judging means for judging whether or not the direction of spiral tracks on one side of the disc differs from that of spiral tracks on the other side by identifying the identification section of the cartridge when the loading means has received the cartridge.

With the above configuration, various types of discs can be identified using the first identifier that indicates whether or not one side of the disc can be written into, the second identifier that indicates whether or not one side of the disc is for reproduction only, the third identifier that indicates whether or not one side or the other side of the disc has a track spiral reverse to the forward direction, the fourth identifier that indicates whether or not the other side of the disc has the reverse track spiral, and the fifth identifier that indicates whether or not the other side of the disc can be written into.

With the disc apparatus of the present invention which houses a disc on whose spiral tracks information is recorded, receives a cartridge with an identification section that indicates whether or not the direction of spiral tracks on one side of the disc housed differs from that of spiral tracks on the other side, and records the information on the disc in the loaded cartridge and reproduces the information recorded on the disc, the cartridge is loaded in the apparatus and, when the cartridge has been loaded, the identification section of the cartridge is identified to judge whether or not the direction of spiral tracks on one side of the disc differs from that of spiral tracks on the other side.

This invention can be more fully understood from the following detailed description when taken in conjunction with the accompanying drawings, in which:
FIGS. 1A and 1B are perspective views of a cartridge according to an embodiment of the present invention;
FIGS. 2A and 2B are explanatory views of grooves serving as tracks formed on an optical disc housed in a cartridge of FIG. 1A or 1B;
FIGS. 3A and 3B are explanatory views of grooves serving as tracks formed on an optical disc housed in a cartridge of FIG. 1A or 1B;
FIGS. 4A and 4B are explanatory views of grooves serving as tracks formed on an optical disc housed in a cartridge of FIG. 1A or 1B;
FIG. 5 is a schematic sectional view showing the relationship between an identification section provided on the cartridges shown in FIGS. 1A and 1B and an sensor in a sensing section for sensing the identification section;
FIG. 6 is a schematic sectional view to showing the relationship between an identification section provided on the cartridges shown in FIGS. 1A and 1B and an sensor in a sensing section for sensing the identification section;
FIG. 7 is a schematic perspective view of an optical disc apparatus and a cartridge, showing an outward appearance;
FIGS. 8A, 8B, and 8C are schematic sectional views of the cartridge loading mechanism in the optical disc apparatus, showing its internal arrangement;
FIG. 9 is a block diagram of the control system in the optical disc apparatus;
FIG. 10 is a table of the results of identifying the types of optical discs at the identification section in the cartridge;
FIG. 11 is a perspective view of an optical disc apparatus and a cartridge, showing their outward appearances;
FIG. 12 is a block diagram of the control system in the optical disc apparatus; and
FIG. 13 is a table of the results of identifying the types of optical discs at the identification section in the cartridge.

Hereinafter, referring to the accompanying drawings, a cartridge for housing a disc and a disc apparatus for handling the cartridge according to an embodiment of the present invention will be explained.

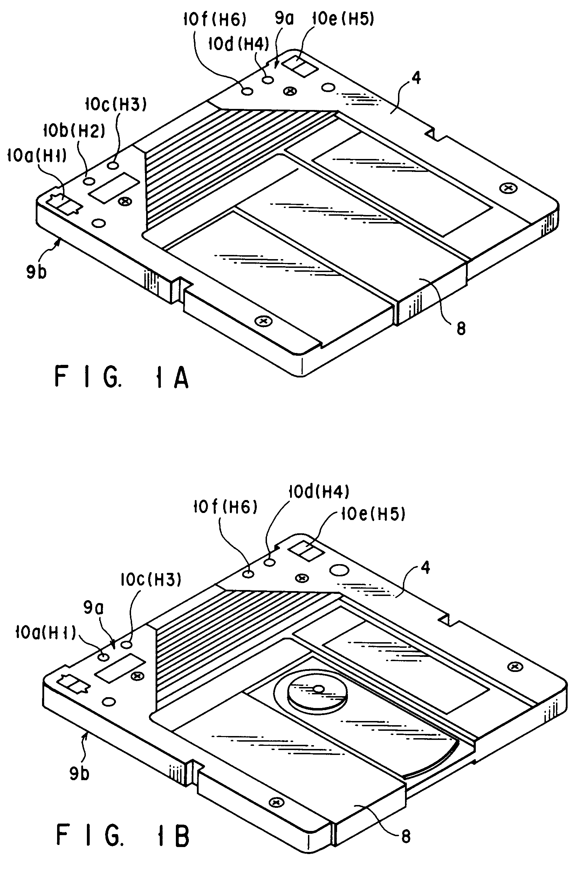

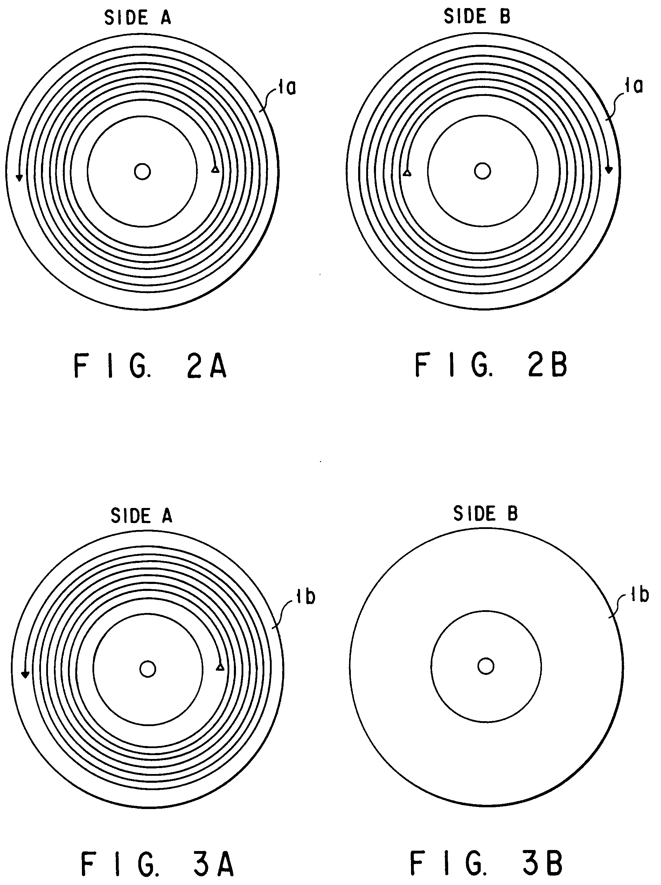

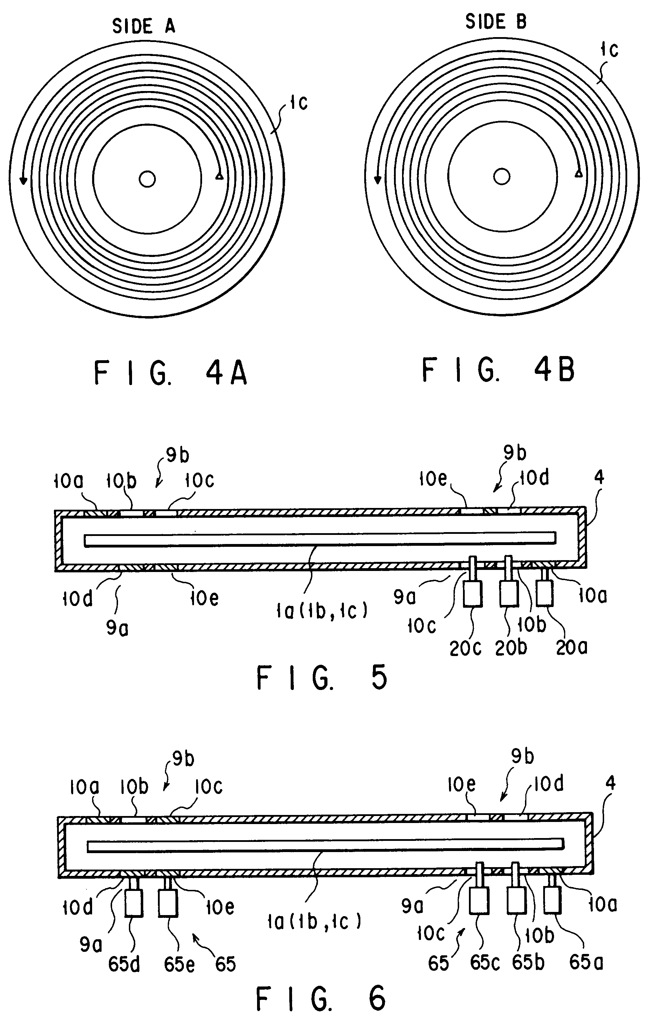

FIGS. 1A and 1B are schematic views of a cartridge in which a disc is housed according to an embodiment of the present invention. FIGS. 2A and 2B, FIGS. 3A and 3B, and FIGS. 4A and 4B are plan views of various types of optical discs housed in the cartridge shown in FIG. 1A or 1B. As shown in FIGS. 2A and 2B, FIGS. 3A and 3B, and FIGS. 4A and 4B, different types of optical discs 1a, 1b, 1c each have tracks of spiral grooves with a constant radial pitch and are rotated by a motor 2. Here, both sides, the obverse side (side A) and the reverse side (side B) of optical disc 1a can be used as shown in FIGS. 2A and 2B, with forward (counterclockwise) spiral tracks provided on side A and reverse (clockwise) spiral tracks provided on side B. For both side A and side B, addressing is done from the inner circumference toward the outer circumference. This enables data to be recorded and reproduced onto and from side A and side B simultaneously without changing the direction of rotation of the optical disc 1a. In the case of the optical disc 1b, only one side, the obverse side (side A) is determined to be an effective side on which data is recorded as shown in FIGS. 3A and 3B, with forward, or, counterclockwise spiral tracks being provided on side A and the reverse side (side B) being determined to be an ineffective side. Furthermore, in the case of the optical disc 1c, both of the obverse side (side A) and the reverse side (side B) can be used as shown in FIGS. 4A and 4B, with forward, or, counterclockwise spiral tracks provided on both of side A and side B. This enables data to be recorded and reproduced onto and from side A and side B, without changing the direction of rotation of optical disc 1c.

As shown in FIGS. 1A and 1B, optical disc 1a, 1b, or 1c is housed in the cartridge 4. The cartridge 4, in which optical disc 1a, 1b, or 1c is inserted as shown in FIG. 5 or 6, is provided with a shutter 8 for partially exposing the optical disc 1a, 1b, or 1c, a disc supporting member (not shown), and identification sections 9a, 9b for indicating the contents of optical disc 1a, 1b, or 1c housed. FIG. 1A shows the cartridge 4 with the shutter 8 closed, and FIG. 1B shows the cartridge with the shutter 8 open. The identification section 9a is provided on the obverse side of each of optical discs 1a, 1b, 1c, and the identification section 9b is provided on the reverse side of each of optical discs 1a, 1b. 1c.

The identification section 9a is made up of three penetration portions 10a (H1), 10b (H2), 10c (H3) and three penetration portions 10d (H4), 10e (H5), 10f (H6) provided in the side end area of the cartridge 4. The penetration portion 10b (H2) indicates whether the bottom faces of optical discs 1a, 1b, 1c are used as a RAM (a random access memory, whose reflectivity is low) or as a ROM (a read-only memory, whose reflectivity is high), depending on whether the penetration is open or closed. The penetration portion 10b is closed for RAM use and open for ROM use. The penetration portion 10c (H3) indicates whether or not reverse spiral (CW) are provided on the obverse side or the reverse side, depending on whether the penetration is open or closed. The penetration portion 10c is closed when there are no reverse spiral tracks, and open when reverse spiral tracks are present. The penetration portion 10a (H1) indicates whether the reverse side of optical disc 1a, 1b, or 1c can or cannot be written into, and is closed when the reverse side can be written into and open when the reverse side cannot be written into. The penetration portion 10d (H4) indicates whether the obverse side of optical disc 1a, 1b, or 1c has forward spiral (CCW) tracks or reverse spiral (CW) tracks, depending on whether the penetration is open or closed. The penetration portion 10d is closed for forward spiral tracks and open for reverse spiral tracks. Furthermore, the penetration portion 10d indicates whether the obverse side is a RAM or a ROM when the penetration portion 10c is closed, the penetration portion 10b is open, and the reverse side of optical disc 1a, 1b, or 1c is an ineffective side and the obverse side has forward spiral tracks. It is closed for RAM use and open for ROM use. The penetration portion 10e (H5) indicates whether the obverse side of optical disc 1a, 1b, or 1c can or cannot be written into. It is closed when the disc can be written into and open when the disc cannot be written into. Furthermore, when the penetration portion 10c is closed and the penetration portion 10a is open, it is judged that the reverse side of optical disc 1a, 1b, or 1c is determined to be an ineffective side. When the penetration portion 10b is closed and the penetration portion 10d is open, the obverse side of optical disc 1a, 1b, or 1c is judged to be an ineffective side. When the penetration portion 10b is open and the penetration portion 10d is closed, it is judged that the reverse side of optical disc 1a, 1b, or 1c has reverse spiral tracks and the obverse side has forward spiral tracks. When the penetration portion 106 is open and the penetration portion 10d is open, it is judged that the reverse side of optical disc 1a, 1b, or 1c has forward spiral tracks and the obverse side has reverse spiral tracks. Still furthermore, the penetration portion 10f (H6) is provided for identification of another type of optical disc that will be available in the future. The penetration portion 10f is normally closed.

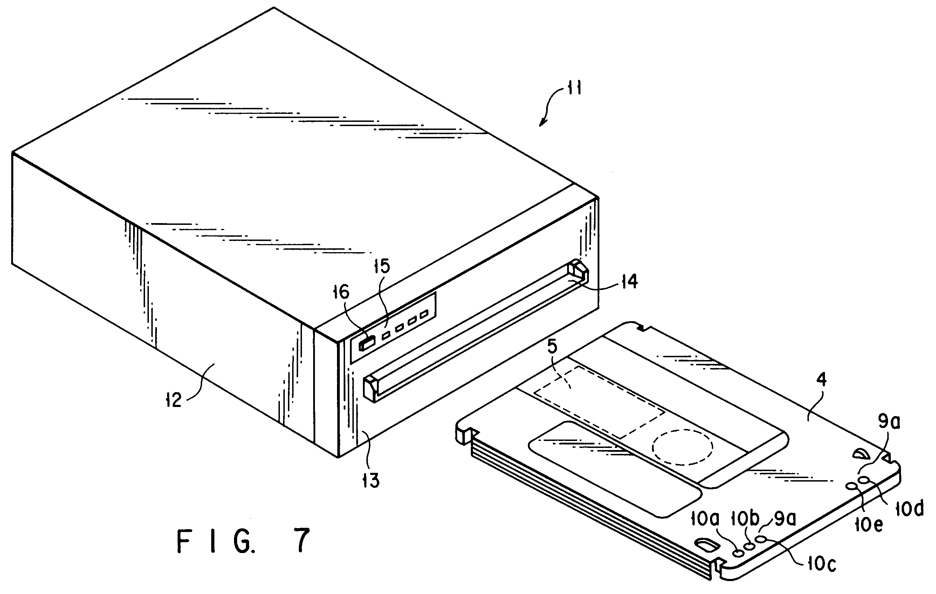

Hereinafter, the optical disc apparatus 11 that records and reproduces the data onto and from the cartridge 4 in which the optical disc 1b or 1c is housed, will be described with reference to FIG. 7.

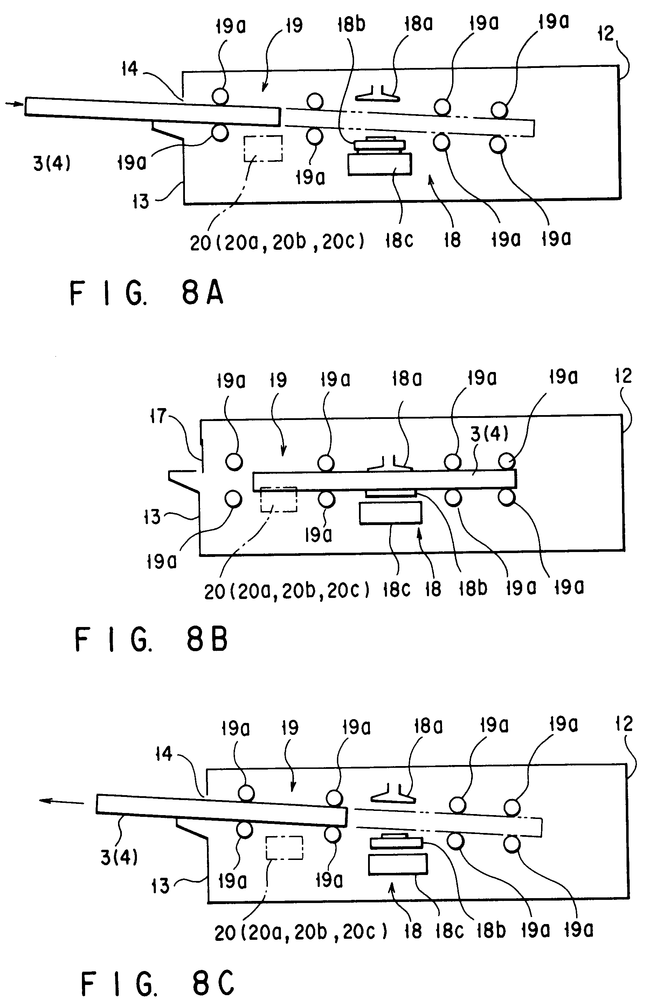

The optical disc apparatus 11 has the following arrangement. In the front section 13 at the front of a housing 12, a slot 14 with an easy-to-open-and-shut shutter (not shown) for allowing a cartridge to be inserted and removed, is provided. The front section 13 of the housing 12 is provided with status indicator sections 15, ... that indicate the state of the apparatus, and a cartridge eject switch 16. As shown in FIG. 8A to 8C, the front section 13 of the housing 12 is provided with the cartridge slot 14 that is opened and closed by the shutter 17. Furthermore, the housing contains an information processing unit (not shown) composed of a drive base mechanism 18 and a loading mechanism 19, a sensing section 20 for sensing the identification section 9a for indicating the type of the optical disc housed in the cartridge 4 loaded, and a control circuit board (not shown) for driving these sections. The loading mechanism 19 is made up of transport rollers 19a, .... The drive base mechanism 18 comprises a clamper 18a, a turntable 18b, and a rotary motor 18c. The sensing section 20 is composed of three contact-type sensors 20a, 20b, 20c as shown in FIG. 5, which are each turned on when the respective sense contacts are pressed. With the cartridge 4 loaded, the sensors 20a, 20b, 20c are allowed to face the penetration portions 10a, 10b, 10c in the identification section 9a. With the penetration portions 10a, 10b, 10c closed, when the loaded cartridge moves downward, the corresponding sense contacts are pressed, causing the relevant sensors to turn on.

Referring to FIGS. 8A to 8C, the operation of the cartridge loading mechanism in the optical disc apparatus 11 will be explained. As shown in FIG. 8A, in loading, the cartridge 4 inserted into the slot 14 is conveyed by the transport rollers 19a, .... After having been loaded in the housing 12 and brought into a horizontal state, the cartridge is clamped on the turntable 18b on the rotary motor 18c by the clamper 18a and immobilized on the turntable 18b. This enables the optical disc 1b (1c) housed in the cartridge 4 to face the optical head (not shown), which can then project a laser beam onto the disc. When the cartridge 4 is brought into the horizontal state, the identification section 9a or 9b is sensed by the sensors 20a, 20b, 20c in the sensing section 20. At the time of ejection, the cartridge 4 is conveyed backward by the transport rollers 19a, ... and ejected from the cartridge slot 14 and then from the housing 12.

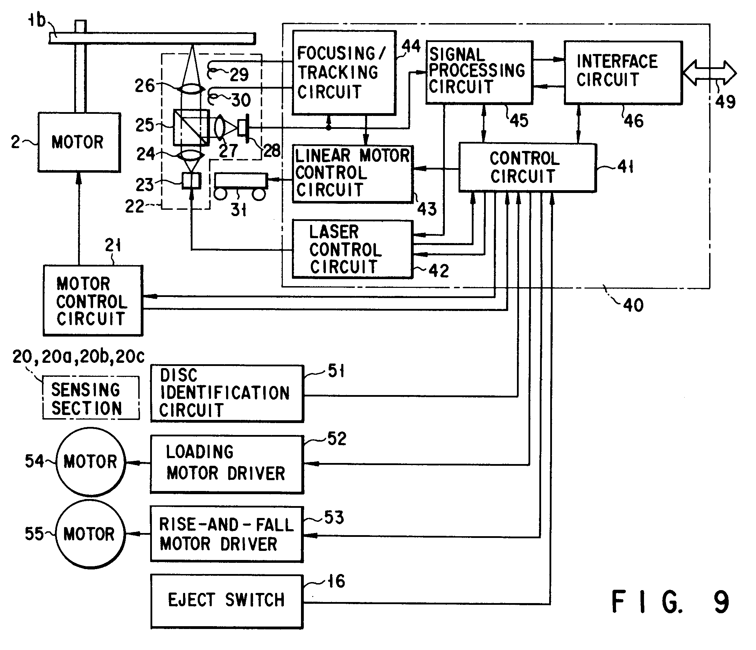

Referring to FIG. 9, the control system in the optical disc apparatus 11 will be explained. The optical disc 1b (1c) is rotated by the motor 2 at, for example, a constant speed. The motor 2 is controlled by a motor control circuit 21 and rotated in the normal direction (normal rotation). The recording and reproducing of data onto the reverse side of the optical disc 1b are effected using an optical head 22 provided under the optical disc 1b. The optical head 22 comprises a laser diode 23 that acts as a semiconductor laser oscillator and generates a laser beam, a collimator lens 24 that converts the laser beam generated at the laser diode 23 into a parallel beam, a beam splitter 25 that directs the laser beam from the collimator lens 24 to an object lens 26 and also reflects and directs the laser beam reflected from the optical disc 1b and passed through the object lens 26 to a collimator lens 27, the object lens 26 that focuses the laser beam from the beam splitter 25 on the optical disc 1b, the collimator lens 27 that gathers the laser beam from the beam splitter 25 onto an optical sensor 28, and driving coils 29, 30.

The object lens 26 is supported by a wire or a leaf spring (not shown). The object lens 26 is moved by the driving coil 29 in the focusing direction, or, in the optical axis of the object lens 26, and by the driving coil 30 in the tracking direction, or, in the direction perpendicular to the optical axis of the lens. The optical sensor 28 is composed of four known quadrant photodiodes, and generates electric signals for focusing and tracking. The laser beam generated at the laser diode 23 passes through the collimator lens 24, beam splitter 25, and object lens 26 and is forced to converge on the optical disc 1b. The reflected beam from the optical disc 1b passes through the object lens 26, beam splitter 25, and collimator lens 27 and is directed to the optical sensor 28.

The optical head 22 is supported so that it can be moved by a linear motor 31 in the direction of the radius of optical disc 1b. A control section 40 is connected to the optical head 22 and linear motor 31. The control section 40 is composed of a control circuit 41, a laser control circuit 42, a linear motor control circuit 43, a focusing/tracking circuit 44, a signal processing circuit 45, and an interface circuit 46. The control circuit 41 controls the optical head 22 and linear motor 31, and provides recording and reproducing control of the optical head 22. In response to the changeover signal from the control circuit 41, the laser control circuit 42 causes the laser diode 23 to produce a reproducing laser beam with a constant light intensity in the reproducing mode, and drives the laser diode 23 in response to the recording pulse supplied from the control circuit 41 to produce an intensity-modulated recording laser beam. The laser control circuit 42 senses the monitor current from a photodiode (not shown) and controls the output of the laser diode 23.

The linear motor control circuit 43 moves the linear motor 31 in response to the signal from the control circuit 41 and the track differential signal from the focusing/tracking circuit 44. The focusing/tracking circuit 44 obtains a track differential signal from the output of the optical sensor 28 and according to the track differential signal, outputs a track driving signal, and further generates and outputs a focusing signal. The track driving signal outputted from the focusing/tracking circuit 44 is supplied to the tracking-direction driving coil 30. The track differential signal outputted from the focusing/tracking circuit 44 is supplied to the linear motor control circuit 43. The focusing signal outputted from the focusing/tracking circuit 44 is supplied to the focusing-direction driving coil 29, which is controlled so that the laser beam may remain focused on the optical disc 1c.

In the state where focusing and tracking control is effected as described above, the outputs of the individual photodiodes of the optical sensor 28 are supplied to the signal processing circuit 45. The signal processing circuit 45 produces a sum current of the outputs of the individual photodiodes of the optical sensor 28, converts the sum current into a voltage value, and on the basis of the voltage value, reproduces the image data and the address signals including the track number and the sector number. In the signal processing circuit 45, there is provided a circuit that demodulates the reproduced signal and corrects errors in the signal. The signal subjected to the error correction process is transferred via an interface circuit 46 and a bus 49 to an optical disc control device (not shown) acting as an external device. In the signal processing circuit 45, there is also provided a modulation circuit that modulates the recording data supplied from the optical disc control device (not shown) via the but 49 and the interface circuit 46 into a recording pulse. The recording pulse is outputted to the laser control circuit 43.

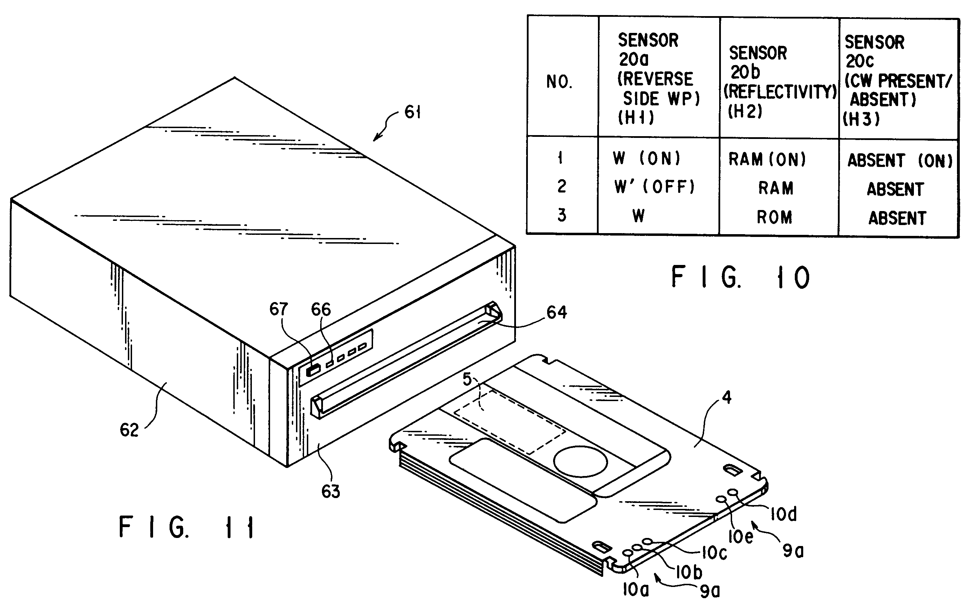

Connected to the control circuit 41 are the motor control circuit 21, a disc identification circuit 51, a loading motor driver 52, a rise-and-fall motor driver 53, and an eject switch 16. On the basis of the sense result of the sensors 20a, 20b, 20c in the sensing section 20, the disk identification circuit 51 identifies the type of the optical disc, or the insertion of the cartridge as shown in FIG. 10. For example, when the sensor 20b is off, it is determined from the presence of reverse spiral tracks that a disc unable to be dealt with by the optical disc apparatus 11 has been loaded. Then, the identification signal is outputted. When all of the sensors 20a, 20b, 20c are on, it is determined that an optical disc whose reverse side is a RAM with forward spiral tracks has been loaded and the data can be written on the RAM. Then, the identification signal is outputted. When the sensors 20a, 20b are on and the sensor 20c is off, it is determined that an optical disc whose reverse side is a RAM with forward spiral tracks has been loaded and the data cannot be written on the RAM. Then, the identification signal is outputted. When the sensor 20a is off and the sensors 20b, 20c are on, it is determined that an optical disc whose reverse side is a ROM with forward spiral tracks has been loaded and the data cannot be written on the ROM. Then, the identification signal is outputted. The identification signal from the disc identification circuit 51 is outputted to the control circuit 41. The loading motor driver 52 drives a loading driving motor 54. The rise-and-fall motor driver 53 drives a rise-and-fall motor 55.

Explained next will be the operation of identifying the optical disc housed in the cartridge 4 when the cartridge 4 has been loaded in the optical disc apparatus 11. If the sensor 20b is off when the cartridge 4 is loaded, the disc identification circuit 51 will determine from the presence of reverse spiral tracks that the cartridge 4 housing optical disc 1a unable to be dealt with by the optical disc apparatus 11 has been loaded and then output the identification signal to the control circuit 41. In response to this signal, the control circuit 41 causes the cartridge 4 to be ejected from the cartridge slot 14. Furthermore, if all of the sensors 20a, 20b, 20c are on when the cartridge is loaded, the identification circuit will determine that optical disc 1b or 1c whose reverse side is a RAM with forward spiral tracks has been loaded and the data can be written on the RAM, and then output the identification signal to the control circuit 41. The control circuit 41 controls the motor control circuit 21 to drives the motor 2, which rotates optical disc 1b or 1c in the cartridge 4. In this state, the data is recorded and reproduced by the optical head 22 onto or from recording layer on the reverse side of optical disc 1b or 1c. Then, the cartridge 4 for which recording and reproducing have been completed is ejected from the cartridge slot 14. Furthermore, if the sensors 20a, 20b are on and the sensor 20c is off when the cartridge is loaded, the identification circuit will determine that optical disc 1b or 1c whose reverse side is a RAM with forward spiral tracks has been loaded and the data cannot be written on the RAM, and then output the identification signal to the control circuit 41. The control circuit 41 controls the motor control circuit 21 to drives the motor 2, which rotates optical disc 1b or 1c in the cartridge 4. In this state, the data is reproduced by the optical head 22 from the recording layer on the reverse side of optical disc 1b or 1c. Then, the cartridge 4 for which reproducing has been completed is ejected from the cartridge slot 14. Furthermore, if the sensor 20a is off and the sensors 20b, 20c are on when the cartridge is loaded, the identification circuit will determine that optical disc 1b or 1c whose reverse side is a ROM with forward spiral tracks has been loaded and the data cannot be written on the ROM, and then output the identification signal to the control circuit 41. The control circuit 41 controls the motor control circuit 21 to drives the motor 2, which rotates optical disc 1b or 1c in the cartridge 4. In this state, the data is reproduced by the optical head 22 from the recording layer on the reverse side of optical disc 1b or 1c. Then, the cartridge 4 for which reproducing has been completed is ejected from the cartridge slot 14. Furthermore, if the sensor 20a is off and the sensors 20b, 20c are on when the cartridge is loaded, the identification circuit will determine that optical disc 1b whose reverse side is an ineffective side has been loaded, and then output the identification signal to the control circuit 41. In response to this signal, the control circuit 41 causes the cartridge 4 to be ejected from the cartridge slot 14.

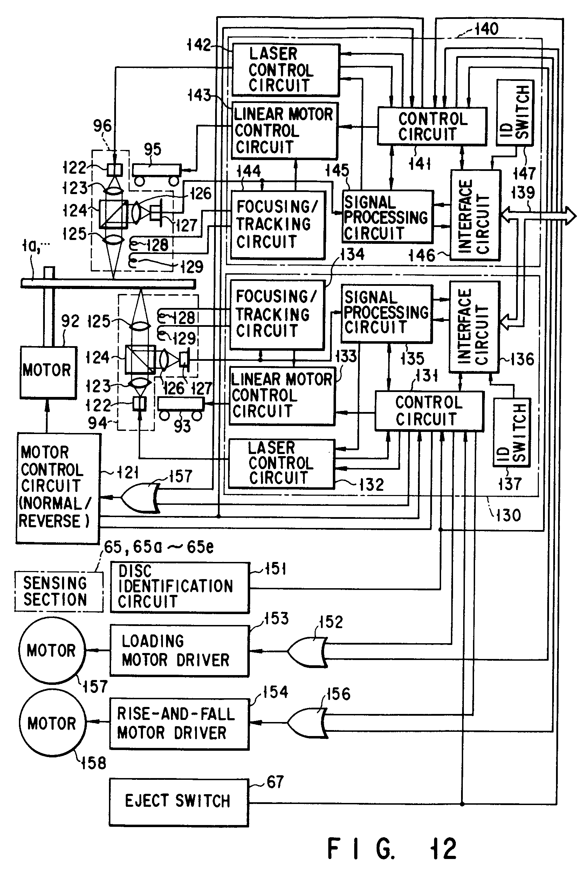

The optical disc apparatus 61 that records and reproduces the data onto and from the cartridge 4 in which one of the optical discs 1a, 1b, 1c is housed will be described with reference to FIG. 11.

The optical disc apparatus 61 has the following configuration. In the front section 63 at the front of a housing 62, a slot 64 with an easy-to-open-and-shut shutter (not shown) for allowing a cartridge to be inserted and removed, is provided. On the front panel section of the housing 62, a status indicator section 66 and an eject switch for cartridge removal are provided. The internal arrangement of the optical disc apparatus 61 has almost the same as that of the optical disc apparatus 11 except that the configuration of the sensing section 65 that senses the identification section 9a indicating the type of optical disc differs from that of the sensing section 20. Specifically, the sensing section 65 is composed of five contact-type sensors 65a, 65b, 65c, 65d, 65e as shown in FIG. 6, which are each turned on when the respective sense contacts are pressed. With the cartridge 4 loaded, the sensors 65a, 65b, 65c, 65d, 65e are allowed to face the penetration portions 10a, 10b, 10c, 10d, 10e in the identification section 9a. With the penetration portions 10a, 10b, 10c, 10d, 10e closed, when the loaded cartridge moves downward, the corresponding sense contacts are pressed, causing the relevant sensors to turn on.

Hereinafter, the control system in the optical disc apparatus 61 will be described with reference to FIG. 12. The optical disc 1a, ... is rotated by a motor 92 at, for example, a constant speed. The motor 92 is controlled by a motor control circuit 121 and rotated in the normal direction (normal rotation) or in the reverse direction (reverse rotation). The recording and reproducing of data onto the reverse side of the optical disc 1a, ... are effected using an optical head 94 provided under the optical disc 1a, .... The recording and reproducing of data onto the obverse side of the optical disc 1a, ... are effected using an optical head 96 provided above the optical disc 1a, .... The optical head 94 comprises a laser diode 122 that acts as a semiconductor laser oscillator and generates a laser beam, a collimator lens 123 that converts the laser beam generated at the laser diode 122 into a parallel light beam, a beam splitter 124 that directs the laser beam from the collimator lens 123 to an object lens 125 and also reflects and directs the reflected laser beam from the object lens 125 to a collimator lens 126, the object lens 125 that focuses the laser beam from the beam splitter 124 on the optical disc 1a, ..., the collimator lens 126 that gathers the laser beam from the beam splitter 124 onto an optical sensor 127, the optical sensor 127, and driving coils 128, 129.

The object lens 125 is supported by a wire or a leaf spring (not shown). The object lens 125 is moved by the driving coil 128 in the focusing direction, or, in the optical axis of the lens, and by the driving coil 129 in the tracking direction, or, in the direction perpendicular to the optical axis of the lens. The optical sensor 127 is composed of four quadrant photodiodes, and generates electric signals for focusing and tracking. The laser beam generated at the laser diode 122 passes through the collimator lens 123, beam splitter 124, and object lens 125 and is forced to converge on the optical disc 1a, .... The reflected beam from the optical disc 1a passes through the object lens 125, beam splitter 124, and collimator lens 126 and is directed to the optical sensor 127.

The optical head 96 has the same arrangement as that of the optical head 94. The optical head 94 is moved by a linear motor 93 in the direction of the radius of the optical disc 1a, .... The optical head 96 is supported so that it can be moved by a linear motor 95 in the direction of the radius of optical disc 1a, .... A first control section 130 is connected to the optical head 94 and linear motor 93. A second control section 140 is connected to the optical head 96 and linear motor 95.

The first control section 130 is composed of a control circuit 131, a laser control circuit 132, a linear motor control circuit 133, a focusing/tracking circuit 134, a signal processing circuit 135, an interface circuit 136, and an ID switch 137. The control circuit 131 controls the optical head 94 and linear motor 93, and provides recording and reproducing control of the optical head 94.

In response to the changeover signal from the control circuit 131, the laser control circuit 132, in the reproducing mode, causes the laser diode 122 to produce a reproducing laser beam with a constant light intensity, and in the recording mode, drives the laser diode 122 in response to the recording pulse supplied from the control circuit 131 to produce an intensity-modulated recording laser beam. The laser control circuit 132 senses the monitor current from a photodiode (not shown) and controls the output of the laser diode 122.

The linear motor control circuit 133 moves the linear motor 93 in response to the signal from the control circuit 131 and the track differential signal from the focusing/tracking circuit 134. The focusing/tracking circuit 134 obtains a track differential signal from the output of the optical sensor 127 and according to the track differential signal, outputs a track driving signal, and further generates and outputs a focusing signal. The track driving signal outputted from the focusing/tracking circuit 134 is supplied to the tracking-direction driving coil 127. The track differential signal outputted from the focusing/tracking circuit 134 is supplied to the linear motor control circuit 133. The focusing signal outputted from the focusing/tracking circuit 134 is supplied to the focusing-direction driving coil 128, which is controlled so that the laser beam may remain focused on the optical disc 1a, ....

In the state where focusing and tracking control is effected as described above, the outputs of the individual photodiodes of the optical sensor 127 are supplied to the signal processing circuit 135. The signal processing circuit 135 produces a sum current of the outputs of the individual photodiodes of the optical sensor 127, converts the sum current into a voltage value, and on the basis of the voltage value, reproduces the image data and the address data including the track number and the sector number. In the signal processing circuit 135, there is provided a circuit that demodulates the reproduced signal and corrects errors in the signal. The signal subjected to the error correction process is transferred via the interface circuit 136 and a bus 139 to an optical disc control device (not shown) acting as an external device. In the signal processing circuit 135, there is also provided a modulation circuit that modulates the recording data supplied from the optical disc control device (not shown) via the but 139 and interface circuit 136 into a recording pulse. The recording pulse is outputted to the laser control circuit 133. Set in the ID switch 137 is the data indicating that the interface circuit 136 is a circuit in the control system for the lower optical head 94. Depending on the data in the ID switch 137, a process corresponding to either the control system for the upper optical head 94 or that for the lower optical head 96 is executed.

The second control section 140 is composed of a control circuit 141, a laser control circuit 142, a linear motor control circuit 143, a focusing/tracking circuit 144, a signal processing circuit 145, an interface circuit 146, and an ID switch 147. The second control section has the same configuration as that of the first control section 130 except that in the ID switch 147, the data indicating that the interface circuit 146 is a circuit in the control system for the upper optical head 96 is set.

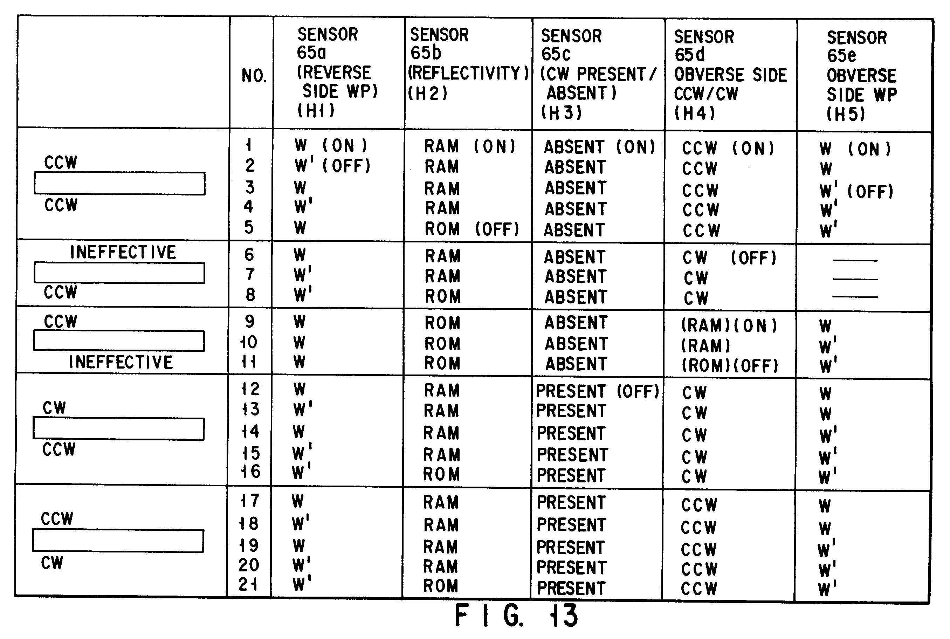

Connected to the control circuits 131, 141 are the motor control circuit 121 via an OR circuit 157, a disc identification circuit 151, a loading motor driver 153 via an OR circuit 152, a rise-and-fall motor driver 154 via the OR circuit 156, and an eject switch 67. The motor control circuit 121 rotates the motor 92 according to the control signal supplied from the control circuits 131, 141, and changes the direction of rotation of the motor 92 between the normal direction and the reverse direction on the basis of the identification signal from the disc identification circuit 151. Furthermore, the motor control circuit 121 outputs a signal indicating the direction of rotation to the control circuits 131, 141. The disc identification circuit 151 determines the type of optical disc 1a, ... housed in the cartridge 4 inserted as shown in FIG. 13, on the basis of the sense results of the sensors 65a to 65e in the sensing section 75. For example, when all of the sensors 65a to 65e are on as shown by NO. 1 in the table of FIG. 13, it is determined that both of the obverse and reverse sides are RAMs with forward spiral tracks and the data can be written on both sides. Then, the identification signal is outputted. When the sensors 65b, 65c, 65d, 65e are on and only the sensor 65a is off as shown by NO. 2 in the table of FIG. 13, it is determined that both of the obverse and reverse sides are RAMs with forward spiral tracks and the data can be written on the obverse side and cannot be written on the reverse side. Then, the identification signal is outputted. When the sensors 65a, 65b, 65c, 65d are on and only the sensor 65e is off as shown by NO. 3 in the table of FIG. 13, it is determined that both of the obverse and reverse sides are RAMs with forward spiral tracks and the data cannot be written on the obverse side and can be written on the reverse side. Then, the identification signal is outputted. When the sensors 65b, 65c, 65d are on and the sensors 65a, 65e are off as shown by NO. 4 in the table of FIG. 13, it is determined that both of the obverse and reverse sides are RAMs with forward spiral tracks and the data can be written on neither the obverse side nor the reverse side. Then, the identification signal is outputted. When the sensors 65c, 65d are on and the sensors 65a, 65b, 65e are off as shown by NO. 5 in the table of FIG. 13, it is determined that both of the obverse and reverse sides are ROMs with forward spiral tracks and the data can be written on neither the obverse side nor the reverse side. Then, the identification signal is outputted.

When the sensors 65a, 65b, 65c are on and the sensor 65d is off as shown by NO. 6 in the table of FIG. 13, it is determined that the obverse side is an ineffective side and the reverse side is a RAM with forward spiral tracks and the data can be written on the reverse side. Then, the identification signal is outputted. When the sensors 65b, 65c are on and the sensors 65a, 65d are off as shown by NO. 7 in the table of FIG. 13, it is determined that the obverse side is an ineffective side and the reverse side is a RAM with forward spiral tracks and the data cannot be written on the reverse side. Then, the identification signal is outputted. When the sensor 65c is on and the sensors 65a, 65b, 65d are off as shown by NO. 8 in the table of FIG. 13, it is determined that the obverse side is an ineffective side and the reverse side is a ROM with forward spiral tracks and the data cannot be written on the reverse side. Then, the identification signal is outputted.

When the sensors 65a, 65c, 65d, 65e are on and the sensor 65b is off as shown by NO. 9 in the table of FIG. 13, it is determined that the obverse side is a RAM with forward spiral tracks and the reverse side is an ineffective side, and the data can be written on the obverse side. Then, the identification signal is outputted. When the sensors 65a, 65c, 65d are on and the sensors 65b, 65e are off as shown by NO. 10 in the table of FIG. 13, it is determined that the obverse side is a RAM with forward spiral tracks and the reverse side is an ineffective side, and the data cannot be written on the obverse side. Then, its identification signal is outputted. When the sensors 65a, 65c are on and the sensor 65b, 65d, 65e are off as shown by NO. 11 in the table of FIG. 13, it is determined that the obverse side is a ROM with forward spiral tracks and the reverse side is an ineffective side, and the data cannot be written on the obverse side. Then, the identification signal is outputted.

When the sensors 65a, 65b, 65c are on and the sensors 65c, 65d are off as shown by NO. 12 in the table of FIG. 13, it is determined that the obverse side is a RAM with reverse spiral tracks and the reverse side is a RAM with forward spiral tracks, and the data can be written on both of the obverse and reverse sides. Then, the identification signal is outputted. When the sensors 65b, 65e are on and the sensors 65a, 65c, 65d are off as shown by NO. 13 in the table of FIG. 13, it is determined that the obverse side is a RAM with reverse spiral tracks and the reverse side is a RAM with forward spiral tracks, and the data can be written on the obverse side and cannot be written on the reverse side. Then, the identification signal is outputted. When the sensors 65a, 65b are on and the sensors 65c, 65d, 65e are off as shown by NO. 14 in the table of FIG. 13, it is determined that the obverse side is a RAM with reverse spiral tracks and the reverse side is a RAM with forward spiral tracks, and the data cannot be written on the obverse side and can be written on the reverse side. Then, the identification signal is outputted. When the sensor 65b is on and the sensors 65a, 65c, 65d, 65e are off as shown by NO. 15 in the table of FIG. 13, it is determined that the obverse side is a RAM with reverse spiral tracks and the reverse side is a RAM with forward spiral tracks, and the data can be written on neither the obverse side nor the reverse side. Then, the identification signal is outputted. When all of the sensors 65a to 65d are off as shown by NO. 16 in the table of FIG. 13, it is determined that the obverse side is a ROM with reverse spiral tracks and the reverse side is a ROM with forward spiral tracks, and the data can be written on neither the obverse side nor the reverse side. Then, the identification signal is outputted.

When the sensors 65a, 65b, 65d, 65e are on and the sensor 65c is off as shown by NO. 17 in the table of FIG. 13, it is determined that the obverse side is a RAM with forward spiral tracks and the reverse side is a RAM with reverse spiral tracks, and the data can be written on both of the obverse and reverse sides. Then, the identification signal is outputted. When the sensors 65b, 65d, 65e are on and the sensors 65a, 65c are off as shown by NO. 18 in the table of FIG. 13, it is determined that the obverse side is a RAM with forward spiral tracks and the reverse side is a RAM with reverse spiral tracks, and the data can be written on the obverse side and cannot be written on the reverse side. Then, the identification signal is outputted. When the sensors 65a, 65b, 65d are on and the sensors 65c, 65e are off as shown by NO. 19 in the table of FIG. 13, it is determined that the obverse side is a RAM with forward spiral tracks and the reverse side is a RAM with reverse spiral tracks, and the data cannot be written on the obverse side and can be written on the reverse side. Then, the identification signal is outputted. When the sensors 65b, 65d are on and the sensors 65a, 65c, 65e are off as shown by NO. 20 in the table of FIG. 13, it is determined that the obverse side is a RAM with forward spiral tracks and the reverse side is a RAM with reverse spiral tracks, and the data can be written on neither the obverse side nor the reverse side. Then, the identification signal is outputted. When the sensor 65d is on and the sensors 65a, 65b, 65c, 65e are off as shown by NO. 21 in the table of FIG. 13, it is determined that the obverse side is a ROM with forward spiral tracks and the reverse side is a ROM with reverse spiral tracks, and the data can be written on neither the obverse side nor the reverse side. Then, the identification signal is outputted.

The identification signal from the disc identification circuit 151 is outputted to the motor control circuit 121 and the control circuits 131, 141. The loading motor driver 153 drives a loading driving motor 157. The rise-and-fall motor driver 154 drives a rise-and-fall driving motor 158.

Hereinafter, with the above configuration, the operation of identifying the optical disc 1a, ... housed in the cartridge 4 loaded in the optical disc apparatus 61 will be explained. If all of the sensors 65a to 65e are on when the cartridge 4 is loaded, the disc identification circuit 151 will identify the disc as optical disc 1c both of the obverse and reverse sides of which are RAMs with forward spiral tracks and both sides of which can be written into, and output the identification signal to the control circuits 131, 141. The control circuit 131 (141) outputs a normal rotation signal to the motor control circuit 121 on the basis of the identification signal from the disc identification circuit 151. In response to the normal rotation signal, the motor control circuit 121 drives the motor 92 to rotate the optical disc 1c in the cartridge 4 in the normal direction. In this state, the lower optical head 94 records and reproduces the data on and from the reverse-side recording layer of the optical disc 1c, and the upper optical head 96 records and reproduces the data on and from the obverse-side recording layer of the optical disc 1c. Then, the cartridge 4 for which the recording and reproducing have been completed is ejected from the cartridge slot 44.

If the sensors 65a, 65b, 65d, 65e are on and only the sensor 65c is off when the cartridge 4 is loaded, the disc identification circuit 151 will identify the disc as optical disc 1c both of the obverse and reverse sides of which are RAMs with forward spiral tracks and the obverse side of which can be written into and the reverse side of which cannot be written into, and output the identification signal to the control circuits 131, 141. The control circuit 131 (141) outputs a normal rotation signal to the motor control circuit 121 on the basis of the identification signal from the disc identification circuit 151. In response to the normal rotation signal, the motor control circuit 121 drives the motor 92 to rotate the optical disc 1c in the cartridge 4 in the normal direction. In this state, the lower optical head 94 reproduces the data from the reverse-side recording layer of the optical disc 1c, and the upper optical head 96 records and reproduces the data on and from the obverse-side recording layer of the optical disc 1c. Then, the cartridge 4 for which the recording and reproducing have been completed is ejected from the cartridge slot 44.

If the sensors 65a, 65b, 65c, 65d are on and only the sensor 65e is off when the cartridge 4 is loaded, the disc identification circuit 151 will identify the disc as optical disc 1c both of the obverse and reverse sides of which are RAMs with forward spiral tracks and the obverse side of which cannot be written into and the reverse side of which can be written into, and output the identification signal to the control circuits 131, 141. The control circuit 131 (141) outputs a normal rotation signal to the motor control circuit 121 on the basis of the identification signal from the disc identification circuit 151. In response to the normal rotation signal, the motor control circuit 121 drives the motor 92 to rotate the optical disc 1c in the cartridge 4 in the normal direction. In this state, the lower optical head 94 records and reproduces the data on and from the reverse-side recording layer of the optical disc 1c, and the upper optical head 96 reproduces the data from the obverse-side recording layer of the optical disc 1c. Then, the cartridge 4 for which the recording and reproducing have been completed is ejected from the cartridge slot 44.

If the sensors 65a, 65b, 65d are on and the sensors 65c, 65e are off when the cartridge 4 is loaded, the disc identification circuit 151 will identify the disc as optical disc 1c both of the obverse and reverse sides of which are RAMs with forward spiral tracks and neither the obverse side nor its reverse side of which can be written into, and output the identification signal to the control circuits 131, 141. The control circuit 131 (141) outputs a normal rotation signal to the motor control circuit 121 on the basis of the identification signal from the disc identification circuit 151. In response to the normal rotation signal, the motor control circuit 121 drives the motor 92 to rotate the optical disc 1c in the cartridge 4 in the normal direction. In this state, the lower optical head 94 reproduces the data from the reverse-side recording layer of the optical disc 1c, and the upper optical head 96 reproduces the data from the obverse-side recording layer of the optical disc 1c. Then, the cartridge 4 for which the reproducing has been completed is ejected from the cartridge slot 44.

If the sensors 65b, 65d are on and the sensors 65a, 65c, 65e are off when the cartridge 4 is loaded, the disc identification circuit 151 will determine that both of the obverse and reverse sides will be ROMs with forward spiral tracks and the data can be written on neither the obverse side nor its reverse side, and output the identification signal to the control circuits 131, 141. The control circuit 131 (141) outputs a normal rotation signal to the motor control circuit 121 on the basis of the identification signal from the disc identification circuit 151. In response to the normal rotation signal, the motor control circuit 121 drives the motor 92 to rotate the optical disc 1c in the cartridge 4 in the normal direction. In this state, the lower optical head 94 reproduces the data from the reverse-side recording layer of the optical disc 1c, and the upper optical head 96 reproduces the data from the obverse-side recording layer of the optical disc 1c. Then, the cartridge 4 for which the reproducing has been completed is ejected from the cartridge slot 44.

If the sensors 65a, 65b, 65c are on and the sensor 65d is off when the cartridge 4 is loaded, the disc identification circuit 151 will identify the disc as optical disc 1b whose obverse side is an ineffective side and whose reverse side is a RAM with forward spiral tracks and the reverse side of which can be written into, and output the identification signal to the control circuits 131. The control circuit 131 outputs a normal rotation signal to the motor control circuit 121 on the basis of the identification signal from the disc identification circuit 151. In response to the normal rotation signal, the motor control circuit 121 drives the motor 92 to rotate the optical disc 1b in the cartridge 4 in the normal direction. In this state, the lower optical head 94 records and reproduces the data on and from the reverse-side recording layer of the optical disc 1b. Then, the cartridge 4 for which the recording and reproducing have been completed is ejected from the cartridge slot 44.

If the sensors 65a, 65b are on and the sensors 65c, 65d are off when the cartridge 4 is loaded, the disc identification circuit 151 will identify the disc as optical disc 1b whose obverse side is an ineffective side and whose reverse side is a RAM with forward spiral tracks and the reverse side of which cannot be written into, and output the identification signal to the control circuit 131. The control circuit 131 outputs a normal rotation signal to the motor control circuit 121 on the basis of the identification signal from the disc identification circuit 151. In response to the normal rotation signal, the motor control circuit 121 drives the motor 92 to rotate the optical disc 1b in the cartridge 4 in the normal direction. In this state, the lower optical head 94 reproduces the data from the reverse-side recording layer of the optical disc 1b. Then, the cartridge 4 for which the reproducing has been completed is ejected from the cartridge slot 44.

If the sensor 65b is on and the sensors 65a, 65c, 65d are off when the cartridge 4 is loaded, the disc identification circuit 151 will determine that the obverse side will be an ineffective side and the reverse side will be a ROM with forward spiral tracks and the data cannot be written on the reverse side, and output the identification signal to the control circuits 131. The control circuit 131 outputs a normal rotation signal to the motor control circuit 121 on the basis of the identification signal from the disc identification circuit 151. In response to the normal rotation signal, the motor control circuit 121 drives the motor 92 to rotate the optical disc 1b in the cartridge 4 in the normal direction. In this state, the lower optical head 94 reproduces the data from the reverse-side recording layer of the optical disc 1b. Then, the cartridge 4 for which the reproducing has been completed is ejected from the cartridge slot 44.

If the sensors 65b, 65c, 65d, 65e are on and the sensor 65a is off when the cartridge 4 is loaded, the disc identification circuit 151 will determine that the obverse side will be a RAM with forward spiral tracks and the reverse side will be an ineffective side and the data can be written on the obverse side, and output the identification signal to the control circuit 141. The control circuit 141 outputs a normal rotation signal to the motor control circuit 121 on the basis of the identification signal from the disc identification circuit 151. In response to the normal rotation signal, the motor control circuit 121 drives the motor 92 to rotate the optical disc 1b in the cartridge 4 in the reverse direction. In this state, the upper optical head 96 reproduces the data from the obverse-side recording layer of the optical disc 1b. Then, the cartridge 4 for which the reproducing has been completed is ejected from the cartridge slot 44.

If the sensors 65b, 65c, 65d are on and the sensors 65a, 65e are off when the cartridge 4 is loaded, the disc identification circuit will determine that the obverse side will be a RAM with forward spiral tracks and the reverse side will be an ineffective side and the data cannot be written on the obverse side, and output the identification signal to the control circuit 141. The control circuit 141 outputs a normal rotation signal to the motor control circuit 121 on the basis of the identification signal from the disc identification circuit 151. In response to the normal rotation signal, the motor control circuit 121 drives the motor 92 to rotate the optical disc 1b in the cartridge 4 in the reverse direction. In this state, the upper optical head 96 reproduces the data from the obverse-side recording layer of the optical disc 1b. Then, the cartridge 4 for which the reproducing has been completed is ejected from the cartridge slot 44.

If the sensors 65b, 65c are on and the sensors 65a, 65d, 65e are off when the cartridge 4 is loaded, the disc identification circuit will determine that the obverse side will be a ROM with forward spiral tracks and the reverse side will be an ineffective side and the data cannot be written on the obverse side, and output the identification signal to the control circuit 141. The control circuit 141 outputs a normal rotation signal to the motor control circuit 121 on the basis of the identification signal from the disc identification circuit 151. In response to the normal rotation signal, the motor control circuit 121 drives the motor 92 to rotate the optical disc 1b in the cartridge 4 in the reverse direction. In this state, the upper optical head 96 reproduces the data from the obverse-side recording layer of the optical disc 1b. Then, the cartridge 4 for which the reproducing has been completed is ejected from the cartridge slot 44.

If the sensors 65a, 65c, 65e are on and the sensors 65b, 65d are off when the cartridge 4 is loaded, the disc identification circuit 151 will determine that the obverse side will be a RAM with reverse spiral tracks and the reverse side will be a RAM with forward spiral tracks and the data can be written on both of the obverse and reverse sides, and output the identification signal to the control circuits 131, 141. The control circuit 131 (141) outputs a normal rotation signal to the motor control circuit 121 on the basis of the identification signal from the disc identification circuit 151. In response to the normal rotation signal, the motor control circuit 121 drives the motor 92 to rotate the optical disc 1a in the cartridge 4 in the normal direction. In this state, the lower optical head 94 records and reproduces the data on and from the reverse-side recording layer of the optical disc 1a, and the upper optical head 96 records and reproduces the data on and from the obverse-side of the optical disc 1a. Then, the cartridge 4 for which the recording and reproducing have been completed is ejected from the cartridge slot 44.

If the sensors 65a, 65e are on and the sensors 65b, 65c, 65d are off when the cartridge 4 is loaded, the disc identification circuit 151 will determine that the obverse side will be a RAM with reverse spiral tracks and the reverse side will be a RAM with forward spiral tracks and the data can be written on the obverse side and cannot be written on the reverse side, and output the identification signal to the control circuits 131, 141. The control circuit 131 (141) outputs a normal rotation signal to the motor control circuit 121 on the basis of the identification signal from the disc identification circuit 151. In response to the normal rotation signal, the motor control circuit 121 drives the motor 92 to rotate the optical disc 1a in the cartridge 4 in the normal direction. In this state, the lower optical head 94 reproduces the data from the reverse-side recording layer of the optical disc 1a, and the upper optical head 96 records and reproduces the data on and from the obverse-side recording layer. Then, the cartridge 4 for which the recording and reproducing have been completed is ejected from the cartridge slot 44.

If the sensors 65a, 65c are on and the sensors 65b, 65d, 65e are off when the cartridge 4 is loaded, the disc identification circuit 151 will determine that the obverse side will be a RAM with reverse spiral tracks and the reverse side will be a RAM with forward spiral tracks and the data cannot be written on the obverse side and can be written on the reverse side, and output the identification signal to the control circuits 131, 141. The control circuit 131 (141) outputs a normal rotation signal to the motor control circuit 121 on the basis of the identification signal from the disc identification circuit 151. In response to the normal rotation signal, the motor control circuit 121 drives the motor 92 to rotate the optical disc 1a in the cartridge 4 in the normal direction. In this state, the lower optical head 94 records and reproduces the data on and from the reverse-side recording layer of the optical disc 1a and the upper optical head 96 reproduces the data from the obverse-side recording layer of the optical disc 1c. Then, the cartridge 4 for which the recording and reproducing have been completed is ejected from the cartridge slot 44.

If the sensor 65a is on and the sensors 65b, 65c, 65d, 65e are off when the cartridge 4 is loaded, the disc identification circuit 151 will determine that the obverse side will be a RAM with reverse spiral tracks and the reverse side will be a RAM with forward spiral tracks and the data can be written on neither the obverse side nor the reverse side, and output the identification signal to the control circuits 131, 141. The control circuit 131 (141) outputs a normal rotation signal to the motor control circuit 121 on the basis of the identification signal from the disc identification circuit 151. In response to the normal rotation signal, the motor control circuit 121 drives the motor 92 to rotate the optical disc 1a in the cartridge 4 in the normal direction. In this state, the lower optical head 94 reproduces the data from the reverse-side recording layer of the optical disc 1a and the upper optical head 96 reproduces the data from the obverse-side recording layer of the optical disc 1c. Then, the cartridge 4 for which the reproducing has been completed is ejected from the cartridge slot 44.

If all of the sensors 65a to 65c are off when the cartridge 4 is loaded, the disc identification circuit 151 will determine that the obverse side will be a ROM with reverse spiral tracks and the reverse side will be a ROM with forward spiral tracks and the data can be written on neither the obverse side nor the reverse side, and output the identification signal to the control circuits 131, 141. The control circuit 131 (141) outputs a normal rotation signal to the motor control circuit 121 on the basis of the identification signal from the disc identification circuit 151. In response to the normal rotation signal, the motor control circuit 121 drives the motor 92 to rotate the optical disc 1a in the cartridge 4 in the normal direction. In this state, the lower optical head 94 reproduces the data from the reverse-side recording layer of the optical disc 1a and the upper optical head 96 reproduces the data from the obverse-side recording layer of the optical disc 1c. Then, the cartridge 4 for which the reproducing has been completed is ejected from the cartridge slot 44.

If the sensors 65a, 65c, 65d, 65e are on and the sensor 65b is off when the cartridge 4 is loaded, the disc identification circuit 151 will determine that the obverse side will be a RAM with forward spiral tracks and the reverse side will be a RAM with reverse spiral tracks and the data can be written on both of the obverse and reverse sides, and output the identification signal to the control circuits 131, 141. The control circuit 131 (141) outputs a normal rotation signal to the motor control circuit 121 on the basis of the identification signal from the disc identification circuit 151. In response to the normal rotation signal, the motor control circuit 121 drives the motor 92 to rotate the optical disc 1a in the cartridge 4 in the reverse direction. In this state, the lower optical head 94 records and reproduces the data on and from the reverse-side recording layer of the optical disc 1a and the upper optical head 96 reproduces the data from the obverse-side recording layer of the optical disc 1a. Then, the cartridge 4 for which the recording and reproducing have been completed is ejected from the cartridge slot 44.

If the sensors 65a, 65d, 65e are on and the sensors 65b, 65c are off when the cartridge 4 is loaded, the disc identification circuit 151 will determine that the obverse side will be a RAM with forward spiral tracks and the reverse side will be a RAM with reverse spiral tracks and the data can be written on the obverse side and cannot written on the reverse side, and output the identification signal to the control circuits 131, 141. The control circuit 131 (141) outputs a normal rotation signal to the motor control circuit 121 on the basis of the identification signal from the disc identification circuit 151. In response to the normal rotation signal, the motor control circuit 121 drives the motor 92 to rotate the optical disc 1a in the cartridge 4 in the reverse direction. In this state, the lower optical head 94 reproduces the data from the reverse-side recording layer of the optical disc 1a and the upper optical head 96 records and reproduces the data on and from the obverse-side recording layer of the optical disc 1a. Then, the cartridge 4 for which the recording and reproducing have been completed is ejected from the cartridge slot 44.

If the sensors 65a, 65c, 65d are on and the sensors 65b, 65e are off when the cartridge 4 is loaded, the disc identification circuit 151 will determine that the obverse side will be a RAM with forward spiral tracks and the reverse side will be a RAM with reverse spiral tracks and the data cannot be written on the obverse side and can be written on the reverse side, and output the identification signal to the control circuits 131, 141. The control circuit 131 (141) outputs a normal rotation signal to the motor control circuit 121 on the basis of the identification signal from the disc identification circuit 151. In response to the normal rotation signal, the motor control circuit 121 drives the motor 92 to rotate the optical disc 1a in the cartridge 4 in the reverse direction. In this state, the lower optical head 94 records and reproduces the data on and from the reverse-side recording layer of the optical disc 1a and the upper optical head 96 reproduces the data from the obverse-side recording layer of the optical disc 1c. Then, the cartridge 4 for which the recording and reproducing have been completed is ejected from the cartridge slot 44.

If the sensors 65a, 65d are on and the sensors 65b, 65c, 65e are off when the cartridge 4 is loaded, the disc identification circuit 151 will determine that the obverse side will be a RAM with forward spiral tracks and the reverse side will be a RAM with reverse spiral tracks and the data can be written on neither the obverse side nor the reverse side, and output the identification signal to the control circuits 131, 141. The control circuit 131 (141) outputs a normal rotation signal to the motor control circuit 121 on the basis of the identification signal from the disc identification circuit 151. In response to the normal rotation signal, the motor control circuit 121 drives the motor 92 to rotate the optical disc 1a in the cartridge 4 in the reverse direction. In this state, the lower optical head 94 reproduces the data from the reverse-side recording layer of the optical disc 1a and the upper optical head 96 reproduces the data from the obverse-side recording layer of the optical disc 1c. Then, the cartridge 4 for which the reproducing has been completed is ejected from the cartridge slot 44.

If the sensor 65d is on and the sensors 65a, 65b, 65c, 65e are off when the cartridge 4 is loaded, the disc identification circuit 151 will determine that the obverse side will be a ROM with forward spiral tracks and the reverse side will be a ROM with reverse spiral tracks and the data can be written on neither the obverse side nor the reverse side, and output the identification signal to the control circuits 131, 141. The control circuit 131 (141) outputs a normal rotation signal to the motor control circuit 121 on the basis of the identification signal from the disc identification circuit 151. In response to the normal rotation signal, the motor control circuit 121 drives the motor 92 to rotate the optical disc 1a in the cartridge 4 in the reverse direction. In this state, the lower optical head 94 reproduces the data from the reverse-side recording layer of the optical disc 1a and the upper optical head 96 reproduces the data from the obverse-side recording layer of the optical disc 1c. Then, the cartridge 4 for which the reproducing has been completed is ejected from the cartridge slot 44.

As described above, with the cartridge in which an optical disc is housed, various types of optical discs can be identified using the identification section 10c that indicates whether or not one side of the optical disc can be written into, the identification section 10a that indicates whether or not one side of the optical disc is for reproduction only, the identification section 10b that indicates whether or not one side or the other side has a reverse track spiral opposite to the forward track spiral, the identification section 10d that indicates whether or not the other side of the disc has the reverse track spiral, and the identification section 10e that indicates whether or not the other side of the optical disc can be written into. This makes it possible to provide a cartridge with an identification section able to deal with not only conventional optical disc apparatuses but also future optical disc apparatuses.

Furthermore, in an optical disc apparatus which receives a cartridge that houses an optical disc on which the information has been recorded and has an identification section that indicates whether or not the direction of the track spiral on one side of the optical disc differs from the direction of the track spiral on the other side, and which reproduces the information recorded on the optical disc in the loaded cartridge, the apparatus receives the cartridge and identifies the identification section of the cartridge to judge whether or not the direction of the track spiral on one side of the optical disc differs from the direction of the track spiral on the other side. When the apparatus has judged that the direction of the track spiral on one side differs from the direction of the track spiral on the other side, it ejects the cartridge.

Through these operations, an optical disc apparatus that records and reproduces the information on and from one side of an optical disc using a single optical head, can judge a cartridge in which an optical disc unable to be handled is housed, when it is loaded.

While in the embodiment, the identification section of the cartridge is composed of openings, it may be made up of a material with different reflectivity or of irregularities in the surface. Furthermore, the sensors may optically sense the reflectivity or irregularities in the surface.

As described in detail, with the present invention, it is possible to provide a cartridge with identifiers that can handle not only conventional disc apparatuses but also future disc apparatus.

## Claims

1. A cartridge apparatus characterized by comprising:
a disc (1a, 1b, 1c) with a first side and a second side, at least one of which has spiral tracks formed on it; and
a cartridge (4) in which said disc (1a, 1b, 1c) is housed and which has a first identifier (10c) that indicates whether or not at least one of the first and second sides of said disc (1a, 1b, 1c) has a track spiral reverse to a forward track spiral on it.

2. A cartridge apparatus according to claim 1, characterized in that said cartridge (4) has a second identifier (10a) that indicates whether or not the first side of said disc (1a, 1b, 1c) can be written into.

3. A cartridge apparatus according to claim 1, characterized in that said cartridge (4) has a third identifier (10b) that indicates whether or not the first side of said disc (1a, 1b, 1c) is for reproduction only.

4. A cartridge apparatus according to claim 1, characterized in that said cartridge (4) has a fourth identifier (10d) that indicates whether or not the second side of said disc has the reverse track spiral.

5. A cartridge apparatus according to claim 1, characterized in that said cartridge (4) has a fifth identifier (10e) that indicates whether or not the second side of said disc can be written into.

6. A cartridge apparatus according to claim 1, characterized in that said cartridge (4) has a second identifier (10a) that indicates whether or not the first side of said disc (1a, 1b, 1c) can be written into and a third identifier (10b) that indicates whether or not the first side of said disc (1a, 1b, 1c) is for reproduction only and when said second identifier (10a) indicates that writing is possible and said third identifier (10b) indicates reproduction only, means that the first side of said disc (1a, 1b, 1c) is an ineffective side.

7. A cartridge apparatus according to claim 1, characterized in that said cartridge (4) has a fourth identifier (10d) that indicates whether or not the second side of said disc (1a, 1b, 1c) has the reverse track spiral and when said first identifier (1c) indicates that there is no side with the reverse track spiral and said fourth identifier (10d) indicates the reverse track spiral, means that the second side of said disc (1a, 1b, 1c) is an ineffective side.

8. A cartridge apparatus according to claim 1, characterized in that said cartridge has a fourth identifier (10d) that indicates whether or not the other side of said disc (1a, 1b, 1c) has the reverse track spiral and when said first identifier (1c) indicates that there is a side with the reverse track spiral and said fourth identifier (10d) indicates the forward track spiral, means that the second side of said disc (1a, 1b, 1c) has the reverse track spiral.

9. A cartridge apparatus according to claim 1, characterized in that said cartridge has a fourth identifier (10d) that indicates whether or not the other side of said disc (1a, 1b, 1c) has the reverse track spiral and when said first identifier (1c) indicates that there is a side with the reverse track spiral and said fourth identifier (10d) indicates the reverse track spiral, means that one side of said disc (1a, 1b, 1c) has the reverse track spiral and the other side has the forward track spiral.

10. A cartridge apparatus according to claim 1, characterized in that said cartridge (4) has:
a second identifier (10a) that indicates whether or not the first side of said housed disc (1a, 1b, 1c) can be written into;
a third identifier (10b) that indicates whether or not the first side of said disc (1a, 1b, 1c) is for reproduction only; and
a fourth identifier (10d) that indicates whether or not the other side of said disc (1a, 1b, 1c) is for reproduction only, when said first identifier (1c) indicates that writing is possible, said second identifier (10a) indicates reproduction only, and the first side of said disc (1a, 1b, 1c) is an ineffective side.

11. A disc apparatus characterized by comprising:
a disc (1a, 1b, 1c) which has a first side and a second side opposite to the first side and on whose spiral tracks information is recorded;
a cartridge (4) for housing said disc (1a, 1b, 1c) which has a first identification section (10c) that indicates whether or not the direction of spiral tracks on the first side of the housed disc (1a, 1b, 1c) differs from that of the spiral tracks on the second side;
loading means (19) for loading said cartridge (4);
sensing means (20c, 65c) for sensing the identification section (10c) of said cartridge (4) when said loading means has taken in said cartridge (4), and then generating a sense signal;
judging means (51, 151) for judging from said sense signal whether or not the direction of spiral tracks on the first side of the disc (1a, 1b, 1c) differs from that of the spiral tracks on the second side; and
means (22, 45, 94, 96, 130, 140) for retrieving the information from the disc (1a, 1b, 1c) in said cartridge (4).

12. A disc apparatus according to claim 11, characterized in that said retrieving means (22, 45, 94, 96, 130, 140) includes recording means for recording information onto said disc.

13. A disc apparatus according to claim 11, characterized in that said cartridge (4) has:
a second identifier (10a) that indicates whether or not the first side of said disc (1a, 1b, 1c) can be written into;
a third identifier (10b) that indicates whether or not the first side of said disc (1a, 1b, 1c) is for reproduction only;
a fourth identifier (10d) that indicates whether or not the second side of said disc (1a, 1b, 1c) has a reverse track spiral; and
a fifth identifier (10e) that indicates whether or not the second side of said disc (1a, 1b, 1c) can be written into; and
said judging means (51, 151) judges that one side of said disc (1a, 1b, 1c) is an ineffective side, if said first identifier (10c) indicates that writing is possible and said second identifier (10a) indicates reproduction only when said cartridge (4) has been loaded.

14. A disc apparatus according to claim 11, characterized in that said cartridge (4) has:
a second identifier (10a) that indicates whether or not the first side of said disc (1a, 1b, 1c) can be written into;
a third identifier (10b) that indicates whether or not the first side of said disc (1a, 1b, 1c) is for reproduction only;
a fourth identifier (10d) that indicates whether or not the second side of said disc (1a, 1b, 1c) has a reverse track spiral; and
a fifth identifier (10e) that indicates whether or not the second side of said disc (1a, 1b, 1c) can be written into; and
said judging means (51, 151) judges that the other side of said disc (1a, 1b, 1c) is an ineffective side, if said third identifier (10b) indicates that there is no side with the reverse track spiral and said fourth identifier (10d) indicates that there is a side with the reverse track spiral when said cartridge has been loaded.

15. A disc apparatus according to claim 11, characterized in that said cartridge (4) has:
a second identifier (10a) that indicates whether or not the first side of said disc (1a, 1b, 1c) can be written into;
a third identifier (10b) that indicates whether or not the first side of said disc (1a, 1b, 1c) is for reproduction only;
a fourth identifier (10d) that indicates whether or not the second side of said disc (1a, 1b, 1c) has a reverse track spiral; and
a fifth identifier (10e) that indicates whether or not the second side of said disc (1a, 1b, 1c) can be written into; and
said judging means (51, 151) judges that said first side has the forward track spiral and the other side has the reverse track spiral, if said third identifier (10b) indicates that there is a side with the reverse track spiral and said fourth identifier indicates that there is a side with the forward track spiral when said cartridge (4) has been loaded.

16. A disc apparatus according to claim 11, characterized in that said cartridge (4) has:
a second identifier (10a) that indicates whether or not the first side of said disc (1a, 1b, 1c) can be written into;
a third identifier (10b) that indicates whether or not the first side of said disc (1a, 1b, 1c) is for reproduction only;
a fourth identifier (10d) that indicates whether or not the second side of said disc (1a, 1b, 1c) has a reverse track spiral; and
a fifth identifier (10e) that indicates whether or not the second side of said disc (1a, 1b, 1c) can be written into; and
said judging means (51, 151) judges that said first side has the reverse track spiral and said second side has the forward track spiral, if said third identifier indicates that there is a side with the reverse track spiral and said fourth identifier (10d) indicates that there is a side with the reverse track spiral when said cartridge (4) has been loaded.
